(19) Europäisches Patentamt
European Patent Office
Office européen des brevets

(11) **EP 3 060 769 B1**

(12) **FASCICULE DE BREVET EUROPEEN**

(45) Date de publication et mention
de la délivrance du brevet:
**06.09.2017 Bulletin 2017/36**

(21) Numéro de dépôt: **14780536.0**

(22) Date de dépôt: **11.09.2014**

(51) Int Cl.:
**F01N 3/08** *(2006.01)* **F01N 11/00** *(2006.01)*

(86) Numéro de dépôt international:
**PCT/FR2014/052247**

(87) Numéro de publication internationale:
**WO 2015/059374 (30.04.2015 Gazette 2015/17)**

(54) **PROCEDE DE DIAGNOSTIC D'UN PIEGE A OXYDES D'AZOTE ET DISPOSITIF ASSOCIE**

VERFAHREN ZUR DIAGNOSE EINER STICKOXIDFALLE UND ZUGEHÖRIGE VORRICHTUNG

METHOD FOR DIAGNOSING A NITROGEN OXIDE TRAP AND RELATED DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.10.2013 FR 1360331**

(43) Date de publication de la demande:
**31.08.2016 Bulletin 2016/35**

(73) Titulaire: **Renault S.A.S.
92100 Boulogne-Billancourt (FR)**

(72) Inventeurs:
• **SELLAMI, Ali**
**F-75015 Paris (FR)**
• **THUILLIER, Pascal**
**F-45770 Saran (FR)**
• **WECK, Alice**
**F-91580 Auvers-Saint-Georges (FR)**

(56) Documents cités:
**EP-A2- 1 464 816 FR-A1- 2 940 356**

EP 3 060 769 B1

**Description**

DOMAINE TECHNIQUE DE L'INVENTION

L'invention concerne un procédé de diagnostic de l'état de fonctionnement d'un piège à oxydes d'azote. Elle concerne également un dispositif de diagnostic apte à la mise en oeuvre d'un tel procédé. Elle trouve une application avantageuse sous la forme d'un diagnostic embarqué dans un véhicule automobile équipé d'un moteur diesel associé à un piège à oxydes d'azotes.

ETAT DE LA TECHNIQUE

De nombreux moteurs modernes à combustion interne, en particulier les moteurs diesel des véhicules automobiles, sont équipés d'un piège à oxydes d'azote ($NO_x$) pour respecter les normes légales qui limitent les émissions à l'échappement de polluants par ces véhicules.

Un piège à oxydes d'azote est généralement placé dans la ligne d'échappement d'un véhicule et fonctionne de manière discontinue, selon deux modes distincts.

Pendant le fonctionnement habituel du moteur en mélange pauvre, le piège retient une partie des molécules de $NO_x$ émises par le moteur sur différents compartiments catalytiques de stockage, le reste étant rejeté dans l'atmosphère après avoir traversé le piège. Le pourcentage de molécules de $NO_x$ du moteur qui est retenu par le piège est appelé efficacité de stockage.

Quand la masse de $NO_x$ stockée dans le piège atteint un seuil prédéterminé en fonction de la capacité maximale de stockage, un basculement provoqué du fonctionnement du moteur en mélange riche, c'est-à-dire avec un défaut d'oxygène par rapport à la stoechiométrie, permet de régénérer le piège.

La phase de régénération consiste à purger le piège des $NO_x$ accumulés lors de la phase de fonctionnement de stockage. Au cours de cette phase de fonctionnement en mélange riche, des réducteurs (hydrocarbures imbrûlés HC et monoxyde de carbone CO) provenant du moteur passent dans le piège et réduisent les molécules de $NO_x$ en molécules d'azote $N_2$ et de dioxyde de carbone $CO_2$.

Pendant la phase de purge, on règle la richesse à une valeur moyenne qui est généralement comprise entre 1,03 et 1,05, par exemple 1,04, qui représente un bon compromis entre la durée de la régénération et la quantité de carburant consommée.

Sous l'effet du vieillissement, et parfois d'événements accidentels tels que des chocs thermiques ou mécaniques, l'efficacité de stockage d'un piège à oxydes d'azote diminue, à cause de la baisse du nombre de compartiments catalytiques disponibles dans le piège pour stocker les molécules de $NO_x$.

Pour s'assurer que les rejets dans l'atmosphère des gaz d'échappement d'un véhicule automobile sont en permanence conformes aux normes légales, il est courant de surveiller l'état de fonctionnement de son piège à oxydes d'azote, c'est-à-dire de tester son efficacité de stockage, grâce à un diagnostic embarqué.

On connaît plusieurs procédés qui visent à surveiller l'état de fonctionnement d'un piège à oxydes d'azote.

En particulier, la publication FR 2 940 356-B1 divulgue un procédé de diagnostic dans lequel on détermine un critère de diagnostic égal à la masse de réducteurs utilisée pendant la régénération en mode riche d'un piège à oxydes d'azote, et on compare ce rapport avec un seuil.

La masse de réducteurs consommée est égale à l'intégrale temporelle de la différence entre le débit massique de réducteurs entrant dans le piège, diminué du débit massique de réducteurs sortant du piège. Le débit de réducteurs entrant peut être calculé comme le produit du débit des gaz d'échappement, multiplié par la valeur de la richesse des gaz entrant dans le piège, mesurée par exemple par une sonde à oxygène implantée en amont du piège. De la même manière, le débit de réducteurs sortant peut être calculé comme le produit du débit des gaz d'échappement, multiplié par la valeur de la richesse des gaz sortant du piège, mesurée par exemple par une autre sonde à oxygène implantée en aval du piège.

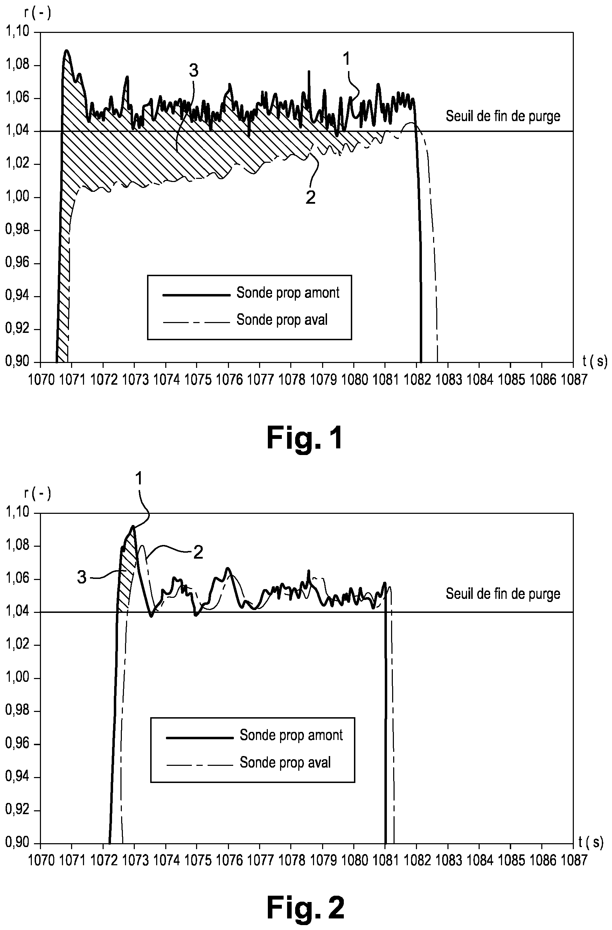

Comme le montrent les figures 1 et 2 annexées, un tel procédé permet de détecter correctement des pièges qui ont perdu toute leur efficacité de stockage et de distinguer sans ambiguïté un piège en bon état d'un piège défectueux.

Sur chacune de ces figures, on a représenté en abscisse le temps t pendant lequel la régénération d'un piège à oxydes d'azote se déroule, et en ordonnée, la richesse des gaz d'échappement à l'entrée ou à la sortie d'un piège. La courbe 1 en trait plein représente la valeur de la richesse mesurée par une sonde à oxygène placée en amont du piège, et la courbe 2 en trait mixte représente la valeur de la richesse mesurée par une sonde à oxygène placée en aval du piège.

Pour un débit de gaz d'échappement constant, la masse de réducteurs consommée lors de la purge, qui est l'objet de la publication FR 2 940 356-B1, est représentée par la surface hachurée 3 située entre les deux courbes de richesse précédentes, entre l'instant du début de la régénération et l'instant de la fin de la régénération.

La régénération commence lorsque la richesse des gaz est augmentée à une valeur supérieure à 1,04, et elle se termine à l'instant où le stock d'oxydes d'azote dans le piège est entièrement réduit, c'est-à-dire lorsqu'on peut constater qu'il n'y a plus de consommation de réducteurs à l'intérieur du piège. En d'autres termes, la régénération est stoppée au moment où la richesse des gaz à la sortie du piège rejoint la valeur de la richesse des gaz à l'entrée du piège, ici 1,04. Le fonctionnement du moteur est alors basculé à nouveau en mélange pauvre, ce qui est matérialisé sur les figures 1 et 2 par la brutale chute de richesse à une valeur inférieure à 0,9.

La surface hachurée 3 sur la figure 1 représente la quantité de réducteurs consommée pendant une phase de régénération d'un piège en bon état, par exemple un piège dont l'efficacité est de 70%. La surface hachurée sur la figure 2 représente la quantité de réducteurs consommée pendant une phase de régénération d'un piège complètement dégradé, par exemple un piège dont l'efficacité résiduelle est de 0%.

Malgré un certain manque de répétabilité de la mesure et une certaine dispersion liée aux tolérances de fabrication des différentes pièces du moteur et des conditions de roulage dans lesquelles se déroule la régénération, on a constaté que la quantité de réducteurs consommée pour un piège d'efficacité nulle est toujours inférieure à celle d'un piège dont l'efficacité est bonne (70%). Le diagnostic est donc fiable lorsqu'on répète la régénération et le calcul du débit de réducteurs.

En revanche, avec la sévérité toujours accrue des normes OBD, il devient nécessaire de distinguer un piège bon (par exemple ayant une efficacité de 70%) d'un piège dont l'efficacité n'est pas tout à fait nulle, par exemple un piège dont l'efficacité résiduelle est encore de 12%.

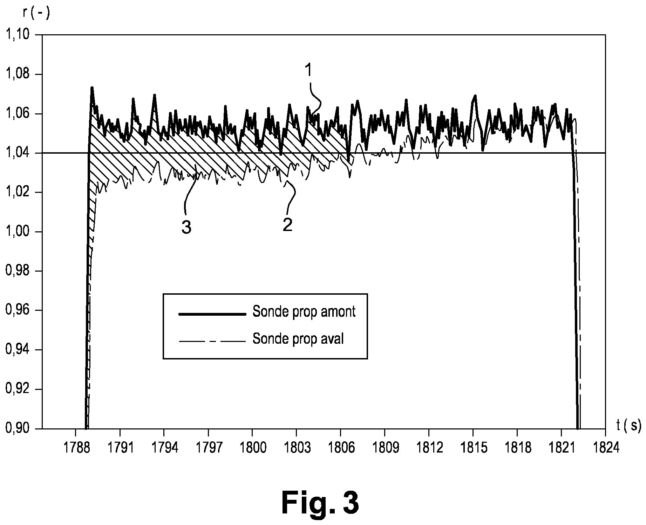

De la même manière que les figures 1 et 2, la surface hachurée sur la figure 3 représente la quantité de réducteurs consommée qui a été mesurée lors d'une purge d'un piège dont l'efficacité résiduelle est de 12%. On observe sur cette figure que la quantité de réducteurs est très voisine de celle qui est représentée sur la figure 1. A cause de la répétabilité de la mesure et de la dispersion des composants et des conditions de roulage, il n'est pas toujours possible de distinguer les deux pièges. En d'autres termes, le procédé comporte un risque statistique de non-détection (piège défaillant déclaré bon) et de fausse détection (piège bon déclaré défaillant).

RESUME DE L'INVENTION

L'invention propose de remédier au manque de précision et aux risques de diagnostics erronés des procédés de diagnostics connus dans lesquels on détermine un critère de diagnostic à partir de la masse de réducteurs consommée pendant la phase de régénération du piège.

Elle propose pour cela un procédé de diagnostic d'un piège à oxydes d'azote apte à décomposer, pendant une étape de régénération, les oxydes d'azote stockés dans le piège par réaction avec des réducteurs, comprenant :

- Une étape de détermination de la masse de réducteurs consommée pendant une étape de régénération ;
- Une étape de comparaison de ladite masse avec un seuil de défaillance en dessous duquel on détermine que le piège est défaillant ; et,
- Une étape d'émission d'un signal indiquant l'état de défaillance du piège,

ledit procédé étant caractérisé en ce qu'on détermine la masse de réducteurs pendant une seconde étape de régénération du piège qui débute après un court délai de temporisation suivant une première étape de régénération complète du piège.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 4 illustre un dispositif de diagnostic d'un piège à oxydes d'azote ;
- la figure 5 est un organigramme des étapes d'un procédé de diagnostic d'un piège à oxydes d'azote conforme à l'invention ; et,
- les figures 6 et 7 sont une illustration du critère de diagnostic selon l'invention, respectivement pour un piège dont l'efficacité est égale à 70% et pour un piège dont l'efficacité est égale à 12%.

DESCRIPTION DETAILLEE DES FIGURES

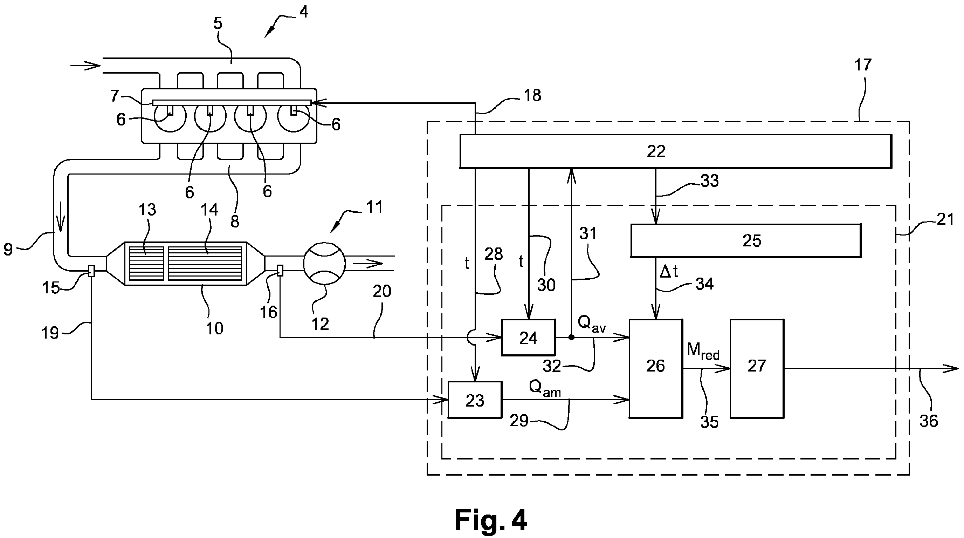

Sur la figure 4, on a représenté un moteur 4 à combustion interne, par exemple un moteur diesel de véhicule automobile, pourvu d'un dispositif de diagnostic selon l'invention. Le moteur 4 est alimenté en air par un collecteur d'admission 5 et en carburant, par exemple du gazole, par une pluralité d'injecteurs 6 montés sur une rampe commune 7 d'alimentation en carburant.

Le moteur 4 est équipé d'un circuit d'échappement des gaz brûlés, comprenant un collecteur d'échappement 8, une conduite d'échappement 9, un dispositif de traitement 10 des émissions polluantes du moteur 4 et un pot d'échappement 11 sur lequel est monté un débitmètre 12, par lequel les gaz d'échappement sont évacués dans l'atmosphère.

Le moteur peut être du type suralimenté et/ou associé à au moins un circuit de recirculation des gaz d'échappement sans pour autant sortir du cadre de l'invention.

Le dispositif de traitement 10 des émissions polluantes se présente sous la forme d'une enveloppe métallique (ou « canning ») de forme sensiblement cylindrique terminée à ses deux extrémités par deux cônes de liaison respectivement avec la conduite d'échappement 9 et le pot d'échappement 11.

Cette enveloppe métallique contient un piège à oxydes d'azote 13. De manière non limitative, elle peut comprendre aussi un autre dispositif 14 de traitement des gaz d'échappement, par exemple un filtre à particules 14 ou un catalyseur d'oxydation 14, qui est disposé ici en aval du piège 13 (dans le sens de circulation des gaz d'échappement figuré par les flèches représentées sur la figure 4).

Le piège à oxydes d'azote 13 stocke une partie

des émissions de $NO_x$ du moteur 1 quand celui-ci fonctionne en mélange pauvre. Périodiquement, lorsqu'une phase de fonctionnement du moteur 4 en mélange riche (dite : phase de régénération, ou phase de purge) est déclenchée, le piège 13 réduit les $NO_x$ en molécules d'azote $N_2$ et de dioxyde de carbone $CO_2$ sous l'action de réducteurs, c'est-à-dire de molécules de monoxyde de carbone et d'hydrocarbures imbrûlés émises par le moteur 4.

Le piège à oxydes d'azote 13 est associé à des moyens de détermination de la richesse des gaz d'échappement du moteur 4 respectivement à l'entrée et à la sortie du piège 13, par exemple respectivement une sonde à oxygène amont 15, disposée sur la conduite d'échappement 9 en amont du piège 13, et une sonde à oxygène aval 16, disposée sur le pot d'échappement 11 en aval du piège 13.

Un calculateur électronique 17 est reliée au moteur 4 par une connexion 18, à la sonde à oxygène amont 15 par une connexion 19 et à la sonde à oxygène aval 16 par une connexion 20. Le calculateur 17 comprend également un dispositif de diagnostic embarqué 21 et un moyen de commande 22 du moteur qui permet notamment de déclencher une régénération du piège à oxydes d'azote 13 par basculement du mode de fonctionnement du moteur 4 en mélange riche de celui-ci, et de déclencher son fonctionnement en mode normal, qui est un mode de stockage des oxydes d'azote, par basculement du mode de fonctionnement du moteur 4 en mélange pauvre.

Le dispositif de diagnostic 21 comprend :

- un moyen de détermination 23 du débit massique de réducteurs (monoxyde de carbone et hydrocarbures imbrûlés) contenus dans les gaz d'échappement en amont $Q_{am}$ du piège 13 ;
- un moyen de détermination 24 du débit massique de réducteurs contenus dans les gaz d'échappement en aval $Q_{av}$ du piège 13 ;
- un moyen d'estimation 25 de la durée $\Delta t$ d'une régénération ;
- un moyen d'estimation 26 de la masse de réducteurs $M_{red}$ consommée pendant une régénération ;
- un moyen de de détermination 27 de l'état de défaillance du piège à oxydes d'azote 13.

Le moyen de détermination 23 du débit massique $Q_{am}$ de réducteurs mesuré en amont du piège 13 est relié en entrée :

- par la connexion 19, à la sonde à oxygène amont 15 ; et
- par une connexion 28, au moyen de commande 22 du moteur.

Il est également relié en entrée au débitmètre 12 par une connexion non représentée. En sortie, il est relié par une connexion 29 au moyen d'estimation 26 de la masse de réducteurs $M_{red}$ consommée pendant une régénération.

Le moyen de détermination 24 du débit massique de réducteurs mesuré en aval $Q_{av}$ du piège 13 est relié en entrée :

- par la connexion 20, à la sonde à oxygène aval 16 ; et
- par une connexion 30, au moyen de commande 22 du moteur.

Il est également relié en entrée au débitmètre 12 par une connexion non représentée. En sortie, il est relié par une connexion 31 au moyen de commande 22, et par une connexion 32 au moyen d'estimation 26 de la masse de réducteurs $M_{red}$.

Le moyen d'estimation 25 de la durée $\Delta t$ d'une phase de régénération est relié en entrée au moyen de commande 22 du moteur par une connexion 33. En sortie, il est relié au moyen d'estimation 26 de la masse de réducteurs $M_{red}$ consommée pendant une régénération, par une connexion 34.

En sortie, le moyen d'estimation 26 de la masse de réducteurs $M_{red}$ est relié par une connexion 35 au moyen de détermination 27 de l'état de défaillance du piège à oxydes d'azote 13, dont la sortie est elle-même reliée par une connexion 36 à d'autres éléments (non représentés sur la figure 4) du calculateur 17 aptes à utiliser le résultat du diagnostic, par exemple des moyens d'allumage d'une lampe témoin au tableau de bord du véhicule.

Selon l'invention, le moyen de commande 22 est apte à commander une double régénération du piège 13. Plus précisément, il commande d'abord un premier basculement du mode de fonctionnement du moteur en mélange riche lorsque la masse d'oxydes d'azote a atteint un seuil donné, et il stoppe cette première phase de régénération quand la régénération est complète, c'est-à-dire à épuisement du stock d'oxydes d'azote. Ce moment correspond à l'instant où la richesse de la sonde à oxygène aval 16 rejoint la richesse à laquelle le calculateur a réglé le moteur pour régénérer le piège 13, c'est-à-dire la richesse mesurée par la sonde à oxygène amont 15. Cette information est communiquée par la sonde à oxygène aval 16 au calculateur 17 par la connexion 31.

A la suite de cette première régénération complète du piège, le calculateur bascule le mode de fonctionnement du moteur 4 en mode de stockage des oxydes d'azote, qui est le mode de fonctionnement normal du moteur en mélange pauvre, pendant une durée très courte. Avantageusement, cette durée est inférieure à 10 secondes. Elle est de préférence sensiblement égale à 5 secondes. Cette durée est une durée de temporisation $\Delta t_{temp}$ après laquelle le calculateur 17 déclenche une seconde régénération du piège.

Le calculateur 17 émet alors un signal permettant de déclencher le calcul des débits massiques de réducteurs $Q_{am}$, $Q_{av}$ en amont et en aval du piège 13 pendant cette seconde régénération. Ces débits sont calculés respectivement par les équations suivantes :

$$(Eq.1) \qquad Q_{am} = Q_{ech} * R_{am}$$

$$(Eq.2) \qquad Q_{av} = Q_{ech} * R_{av}$$

,dans lesquelles :

- $Q_{ech}$ désigne le débit des gaz d'échappement, mesuré par le débitmètre 12 ;
- $R_{am}$ désigne la richesse des gaz d'échappement en amont du piège 13, mesurée par la sonde à oxygène amont 15 ; et
- $R_{av}$ désigne la richesse des gaz d'échappement en aval du piège 13, mesurée par la sonde à oxygène aval 16.

Ce signal sert également de déclencheur à l'intégration temporelle des débits massiques $Q_{am}$ , $Q_{av}$ de réducteurs, dans le moyen d'estimation 26. La masse de réducteurs $M_{red}$ consommée dans le piège 13, c'est-à-dire qui participe à la réaction de réduction des molécules de $NO_x$ stockées dans le piège 13, est obtenue par l'équation suivante :

$$(Eq.3) \qquad M_{red} = \int_{\Delta t} (Q_{am} - Q_{av}) * dt$$

,dans laquelle $\Delta t$ désigne la durée de la seconde régénération pendant laquelle le calcul de l'intégrale est réalisé.

Le moyen de commande 22 reçoit le débit massique de réducteurs en aval $Q_{av}$. Lorsque cette valeur atteint un seuil prédéterminé, le moyen de commande 22 arrête la seconde régénération en stoppant l'émission du signal qui déclenche la régénération, ce qui arrête l'intégration temporelle réalisée dans le moyen d'estimation 26 de la masse de réducteurs.

En d'autres termes, le moyen d'estimation 25 permet de déterminer la durée $\Delta t$ de la régénération entre l'émission et la fin de l'émission du signal issu du moyen de commande 22.

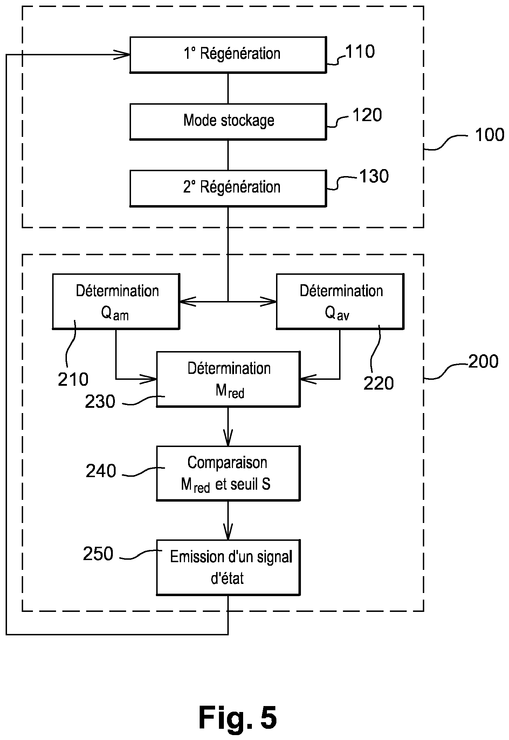

La figure 5 est un organigramme des étapes d'un procédé de diagnostic d'un piège à oxydes d'azote 13 selon l'invention.

Pendant le fonctionnement du moteur 4 en mélange pauvre, un procédé de commande 100 du moteur surveille l'accumulation de $NO_x$ dans le piège à oxydes d'azote 13. Lorsque le piège 13 atteint une valeur prédéterminée de stockage, qui peut être voisine de sa capacité maximale de stockage, le procédé de commande 100 déclenche une première étape de régénération 110 du piège 13, qui consiste à modifier la teneur en réducteurs des gaz d'échappement en sortie du moteur, par un fonctionnement en mélange riche, par exemple à une richesse comprise entre 1,03 et 1,05.

Cette première étape de régénération 110 se poursuit jusqu'à ce que tout le stock de $NO_x$ soit éliminé. Pour déterminer le moment où la régénération peut être arrêtée, l'unité de commande électronique 17 peut, par exemple, considérer l'instant où la richesse mesurée par la sonde à oxygène aval 16 rejoint la richesse mesurée par la sonde à oxygène amont 15. En effet, à cet instant, le fait que les deux valeurs de richesse soient identiques indique qu'il n'y a plus aucune consommation de réducteurs à l'intérieur du piège 13, parce-qu'il n'y a plus d'oxydes d'azote à réduire.

Le procédé de commande 100 se poursuit par une brève étape de fonctionnement du moteur 4 dans son mode de stockage 120 des oxydes d'azote, qui correspond au mode normal de fonctionnement du moteur, par exemple un mode de fonctionnement en mélange pauvre pour un moteur diesel.

Avantageusement, cette étape de stockage 120 a une durée inférieure à 10 secondes, de préférence sensiblement égale à 5 secondes. Cette durée correspond à une durée de temporisation $\Delta t_{tempo}$ avant le déclenchement d'une nouvelle régénération.

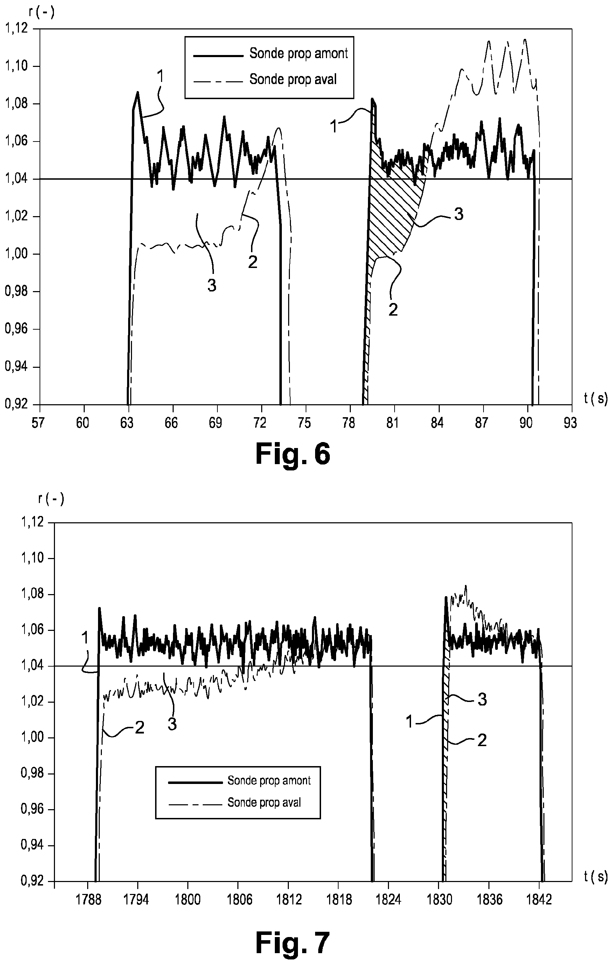

Après cette brève étape de fonctionnement en mode de stockage, l'unité de contrôle électronique déclenche une seconde étape de régénération 130 du piège 13. Contrairement à la première étape de régénération 110, la seconde étape 130 est déclenchée indépendamment de la masse de $NO_x$ dans le piège 13. Son déclenchement ne dépend que de la durée de temporisation $\Delta t_{tempo}$ écoulée depuis la fin de la première étape de régénération 110. Cette seconde étape de régénération 130 s'achève lorsque la richesse mesurée par la sonde à oxygène aval 16 rejoint la valeur de la richesse mesurée par la sonde à oxygène amont 15, par exemple 1,04 sur les figures 6 et 7 qui sont commentées dans la suite.

A l'issue de cette second étape de régénération 130, le procédé de diagnostic proprement dit 200 du piège à oxydes d'azote 13 peut alors être déclenché. Ce procédé 200 commence par une étape de détermination 210 du débit massique de réducteurs $Q_{am}$ en amont du piège 13, obtenu selon l'équation 1, simultanément avec une étape de détermination 220 du débit massique de réducteurs $Q_{av}$ en aval du piège 13, obtenu selon l'équation 2.

La détermination de ces débits se fait pendant toute la durée de la seconde phase de régénération 130. Le procédé de diagnostic 200 se poursuit par une étape 230 de détermination de la masse de réducteurs $M_{red}$ utilisée pendant la seconde phase de régénération 130. Cette masse est obtenue par intégration temporelle de l'écart des débits de réducteurs $Q_{am}$,$Q_{av}$ en amont et en aval du piège 13, entre l'instant de la réception du signal de démarrage de la seconde phase de régénération 130 et l'instant de l'arrêt de la réception de ce signal (selon l'équation 3).

Le procédé 200 se poursuit par une étape 240 de la masse de réducteurs $M_{red}$ utilisée pendant la seconde phase de régénération 130 avec un seuil de défaillance S en dessous duquel on détermine que le piège à oxydes d'azote 13 est défaillant. Le seuil de défaillance S peut être déterminé au banc moteur par des essais statistiques.

Le procédé 200 se termine par une étape 250 au cours de laquelle un signal d'état est émis vers le procédé de commande 100 du moteur 1. Ce signal peut prendre deux états, soit un état défaillant, soit un état non défaillant. Lorsque l'état est défaillant, une alerte peut être remontée au conducteur, par exemple par l'allumage d'un voyant lumineux.

Les figures 6 et 7 illustrent, d'une manière similaire aux figures 1, 2 et 3, l'évolution temporelle de la richesse des gaz à l'entrée et à la sortie d'un piège 13 à oxydes d'azote pendant une phase de commande 100 telle qu'exposé plus haut. Les courbes en trait plein 1 représentent la richesse mesurée par la sonde à oxygène amont 15 et les courbes en trait mixte 2 représentent la richesse mesurée par la sonde à oxygène aval 16.

La figure 6 représente le comportement d'un piège 13 en bon état, par exemple un piège dont l'efficacité a une valeur égale à 70%. La première phase de régénération 110 se déroule ici sensiblement entre les instants t = 63 s et t =72 s. La seconde phase de régénération 130 est déclenchée environ à l'instant t = 79 s et elle s'achève lorsque la richesse mesurée par la sonde à oxygène aval 16 rejoint la richesse mesurée par la sonde à oxygène amont 15. La durée de cette seconde étape de régénération est ici d'environ 4 secondes, entre les instants t = 79 s et t = 83 s. La surface hachurée 3 représente la masse de réducteurs $M_{red}$ consommée pendant cette seconde étape de régénération 130.

La figure 7 représente le comportement d'un piège 13 dégradé, par exemple un piège dont l'efficacité a une valeur égale à 12%. La première phase de régénération 110 se déroule ici sensiblement entre les instants t = 1789 s et t =1821 s. La seconde étape de régénération 130 est déclenchée environ à l'instant t = 1831 s et elle s'achève lorsque la richesse mesurée par la sonde à oxygène aval 16 rejoint la richesse mesurée par la sonde à oxygène amont 15, c'est-à-dire en moins d'une seconde. La surface hachurée 3 représente la masse de réducteurs $M_{red}$ consommée pendant cette seconde étape de régénération 130.

On constate en comparant les surfaces hachurées 3 des figures 6 et 7 que la masse de réducteurs $M_{red}$ consommée lors de la seconde étape de régénération 130 d'un piège en bon état est de très loin la plus élevée des deux.

En effet, après la première étape de régénération 110, la courte étape de stockage 120 permet d'augmenter la capacité de stockage d'oxygène, dit aussi OSC (de l'acronyme anglais pour : Oxygen Storage Capacity) d'un piège 13 dans le cas où celui-ci a une bonne efficacité. Grâce à cette reconstitution de l'OSC, un piège 13 en bon état de fonctionnement peut très rapidement recommencer à absorber des réducteurs lors d'une seconde étape de purge 130 rapprochée. A l'inverse, pour un piège présentant une efficacité dégradée (par exemple 12%), la durée de temporisation $\Delta t_{tempo}$ écoulée entre les deux étapes de purge 110, 130 ne permet pas de recharger l'OSC du piège 13, si bien que les réducteurs utilisés lors de la seconde étape de purge 130 traversent le piège sans réagir. Il en résulte que la richesse mesurée par la sonde à oxygène aval 16 rejoint presque instantanément la richesse mesurée par la sonde à oxygène amont 15.

## Revendications

1.    Procédé de diagnostic (200) d'un piège à oxydes d'azote (13) apte à décomposer, pendant une étape de régénération (110, 130), les oxydes d'azote stockés dans le piège (13) par réaction avec des réducteurs, comprenant :

       - une étape de détermination (230) de la masse de réducteurs ($M_{red}$) consommée pendant une étape de régénération ;
       - une étape (240) de comparaison de ladite masse ($M_{red}$) avec un seuil de défaillance (S) en dessous duquel on détermine que le piège (13) est défaillant ; et
       - une étape (250) d'émission d'un signal indiquant l'état de défaillance du piège (13),

    **CARACTERISE EN CE QU'**
    on détermine la masse de réducteurs ($M_{red}$) pendant une seconde étape de régénération (130) du piège qui débute après un court délai de temporisation ($\Delta t_{tempo}$) suivant une première étape de régénération (110) complète du piège (13).

2.    Procédé de diagnostic (200) selon la revendication 1, dans lequel le délai de temporisation ($\Delta t_{tempo}$) est inférieur à dix secondes.

3.    Procédé de diagnostic (200) selon l'une des revendications 1 ou 2, dans lequel le délai de temporisation ($\Delta t_{tempo}$) est sensiblement égal à cinq secondes

4.    Procédé de diagnostic (200) selon l'une quelconque des revendications précédentes, dans lequel la masse de réducteurs ($M_{red}$) consommée pendant la seconde phase de régénération (130) est calculée comme l'intégrale temporelle, pendant la durée de ladite phase de régénération ($\Delta t$), de la différence entre un débit massique de réducteurs en amont ($Q_{am}$) du piège (13) et un débit massique de réducteurs en aval ($Q_{av}$) du piège (13).

5.    Dispositif de diagnostic (17) d'un piège à oxydes d'azote (13) pour le traitement des émissions polluantes d'un moteur (4), apte à décomposer, pendant une étape de régénération (110, 130) du piège, les oxydes d'azote stockés dans le piège (13) par réaction avec des réducteurs, comprenant :

- un moyen de détermination (23) du débit de réducteurs ($Q_{am}$) contenus dans les gaz d'échappement du moteur (1) en amont du piège (13), mesuré pendant une étape de régénération, relié à une sonde à oxygène (15) située en amont du piège (13) ;
- un moyen de détermination (24) du débit de réducteurs ($Q_{av}$) contenus dans les gaz d'échappement du moteur (1) en aval du piège (10), mesuré pendant une étape de régénération, relié à une sonde à oxygène (16) située en aval du piège (13) ;
- un moyen de détermination (26) de la masse de réducteurs ($M_{red}$) consommée pendant une étape de régénération, relié au moyen de détermination (23) du débit de réducteurs ($Q_{am}$) en amont du piège (13) et au moyen de détermination (24) du débit de réducteurs ($Q_{av}$) en aval du piège (14) ;
- un moyen de détermination (27) de l'état de défaillance du piège (10) en fonction de ladite masse de réducteurs ($M_{red}$) ;

**CARACTERISE EN CE QUE**
ledit dispositif de diagnostic (17) comprend en outre un moyen de commande (22) du moteur apte à régénérer une première fois (110) le piège (13) de manière complète, puis à le régénérer une seconde fois après un court délai de temporisation ($\Delta t_{tempo}$), ladite masse de réducteurs ($M_{red}$) étant déterminée lors de la seconde régénération.

**Patentansprüche**

1. Verfahren zur Diagnose (200) einer Stickoxidfalle (13), die während eines Regenerationsschritts (110, 130) die in der Falle (13) gelagerten Stickoxide durch Reaktion mit Reduktionsmitteln zerlegen kann, das enthält:

- einen Schritt der Festlegung (230) der während eines Regenerationsschritts verbrauchten Reduktionsmittelmasse ($M_{red}$);
- einen Schritt (240) des Vergleichs der Masse ($M_{red}$) mit einer Defektschwelle (S), unterhalb der festgelegt wird, dass die Falle (13) defekt ist; und
- einen Schritt (250) des Sendens eines Signals, das den Defektzustand der Falle (13) anzeigt,

**dadurch gekennzeichnet, dass** die Reduktionsmittelmasse ($M_{red}$) während eines zweiten Regenerationsschritts (130) der Falle festgelegt wird, der nach einer kurzen Verzögerungszeit ($\Delta t_{tempo}$) beginnt, die auf einen ersten vollständigen Regenerationsschritt (110) der Falle (13) folgt.

2. Diagnoseverfahren (200) nach Anspruch 1, wobei die Verzögerungszeit ($\Delta t_{tempo}$) kürzer als zehn Sekunden ist.

3. Diagnoseverfahren (200) nach einem der Ansprüche 1 oder 2, wobei die Verzögerungszeit ($\Delta t_{tempo}$) im Wesentlichen gleich fünf Sekunden ist.

4. Diagnoseverfahren (200) nach einem der vorhergehenden Ansprüche, wobei die während der zweiten Regenerationsphase (130) verbrauchte Reduktionsmittelmasse ($M_{red}$) als das Zeitintegral, während der Dauer der Regenerationsphase ($\Delta t$), der Differenz zwischen einem Massendurchsatz von Reduktionsmitteln stromaufwärts vor ($Q_{am}$) der Falle (13) und einem Massendurchsatz von Reduktionsmitteln stromabwärts hinter ($Q_{av}$) der Falle (13) berechnet wird.

5. Vorrichtung zur Diagnose (17) einer Stickoxidfalle (13) zur Behandlung der Schadstoffemissionen eines Motors (4), die während eines Regenerationsschritts (110, 130) der Falle die in der Falle (13) gelagerten Stickoxide durch Reaktion mit Reduktionsmitteln zerlegen kann, die enthält:

- eine Einrichtung zur Festlegung (23) des Durchsatzes von Reduktionsmitteln ($Q_{am}$), die in den Abgasen des Motors (1) stromaufwärts vor der Falle (13) enthalten sind, gemessen während eines Regenerationsschritts, verbunden mit einer Sauerstoffsonde (15), die sich stromaufwärts vor der Falle (13) befindet;
- eine Einrichtung zur Festlegung (24) des Durchsatzes von Reduktionsmitteln ($Q_{av}$), die in den Abgasen des Motors (1) stromabwärts hinter der Falle (10) enthalten sind, gemessen während eines Regenerationsschritts, verbunden mit einer Sauerstoffsonde (16), die sich stromabwärts hinter der Falle (13) befindet;
- eine Einrichtung zur Festlegung (26) der Reduktionsmittelmasse ($M_{red}$), die während eines Regenerationsschritts verbraucht wird, verbunden mit der Einrichtung zur Festlegung (23) des Reduktionsmitteldurchsatzes ($Q_{am}$) stromaufwärts vor der Falle (13) und mit der Einrichtung zur Festlegung (24) des Reduktionsmitteldurchsatzes ($Q_{av}$) stromabwärts hinter der Falle (14);
- eine Einrichtung zur Festlegung (27) des Defektzustands der Falle (10) abhängig von der Reduktionsmittelmasse ($M_{red}$);

**dadurch gekennzeichnet, dass** die Diagnosevorrichtung (17) außerdem eine Steuereinrichtung (22) des Motors enthält, die ein erstes Mal (110) die Falle (13) vollständig regenerieren und sie dann ein zweites Mal nach einer kurzen Verzögerungszeit ($\Delta t_{tempo}$) regenerieren kann, wobei die Reduktionsmittelmasse ($M_{red}$) während der zweiten Regeneration festgelegt wird.

## Claims

1. Diagnostics method (200) for diagnosing a nitrogen oxides trap (13) capable, during a regeneration step (110, 130), of breaking down the nitrogen oxides stored in the trap (13) by reaction with reducing agents, comprising:

   - a determination step (230) of determining the mass of reducing agents ($M_{red}$) consumed during a regeneration step;
   - a comparison step (240) of comparing the said mass ($M_{red}$) against a failure threshold (S) below which it is determined that the trap (13) is defective; and
   - an emission step (250) in which a signal is emitted indicating the defective status of the trap (13),

   **CHARACTERIZED IN THAT**
   the mass of reducing agents ($M_{red}$) is determined during a second trap regeneration step (130) which begins after a short time delay ($\Delta t_{time}$) following a first regeneration step (110) of full regeneration of the trap (13).

2. Diagnostics method (200) according to Claim 1, in which the time delay ($\Delta t_{time}$) is less than ten seconds.

3. Diagnostics method (200) according to one of Claims 1 and 2, in which the time delay ($\Delta t_{time}$) is substantially equal to five seconds.

4. Diagnostics method (200) according to any one of the preceding claims, in which the mass of reducing agents ($M_{red}$) consumed during the second regeneration phase (130) is calculated as the integral with respect to time, for the duration of the said regeneration phase ($\Delta t$), of the difference between a mass flow rate of reducing agents upstream ($Q_{us}$) of the trap (13) and a mass flow rate of reducing agents downstream ($Q_{ds}$) of the trap (13).

5. Diagnostics device (17) for diagnosing a nitrogen oxides trap (13) for treating the pollutant emissions of an engine (4) capable, during a trap regeneration step (110, 130), of breaking down the nitrogen oxides stored in the trap (13) by reaction with reducing agents, comprising:

   - a determination means (23) of determining the flow rate of reducing agents ($Q_{us}$) contained in the exhaust gases of the engine (1) upstream of the trap (13), measured during a regeneration step, connected to an oxygen probe (15) situated upstream of the trap (13);
   - a determination means (24) of determining the flow rate of reducing agents ($Q_{ds}$) contained in the exhaust gases of the engine (1) downstream of the trap (10), measured during a regeneration step, connected to an oxygen probe (16) situated downstream of the trap (13);
   - a determination means (26) of determining the mass of reducing agents ($M_{red}$) consumed during a regeneration step, which is connected to the determination means (23) of determining the flow rate of reducing agents ($Q_{us}$) upstream of the trap (13) and to the determination means (24) of determining the flow rate of reducing agents ($Q_{ds}$) downstream of the trap (14) ;
   - a determination means (27) for determining the defective status of the trap (10) on the basis of the said mass of reducing agents ($M_{red}$);

   **CHARACTERIZED IN THAT**
   the said diagnostics device (17) further comprises an engine control means (22) able to regenerate the trap (13) a first time (110) completely, and then to regenerate it a second time after a short time delay ($\Delta t_{time}$), the said mass of reducing agents ($M_{red}$) being determined during the second regeneration.

**Fig. 1**

**Fig. 2**

Fig. 3

**Fig. 4**

**Fig. 5**

**Fig. 6**

**Fig. 7**

**EP 3 060 769 B1**

## RÉFÉRENCES CITÉES DANS LA DESCRIPTION

### Documents brevets cités dans la description

• FR 2940356 B1